# EUROPEAN PATENT APPLICATION

(11) **EP 2 745 927 A1**
(43) Date of publication of application: **25.06.2014**
(21) Application number: 12008540.2
(22) Date of filing: 21.12.2012
(51) Int. Cl.: B01J 8/18

(54) **Fluidized bed reactor with internal moving bed reaction unit**

(71) Applicant: Borealis AG, 1220 Vienna (AT)
(72) Inventor: Erikksson, Erik, 444 54 Stenungsund (SE); Bergstra, Michiel, 2600 Berchem (BE); Weickert, Günter, 48683 Ahaus (DE)
(74) Representative: Kador & Partner

(57) **Abstract**

The present invention relates to a reactor assembly for the catalytic polymerization of olefin monomer and optionally comonomer(s) comprising at least one fluidized bed reaction unit comprising an internal moving bed reaction unit, wherein the internal moving bed reactor unit is separated from the fluidized bed reaction unit by at least one substantially vertical wall wherein said at least one substantially vertical wall extends beyond the upper level of the fluidized bed and said internal moving bed reaction unit has at least one inlet for introducing polymer particles into said internal moving bed reaction unit from the fluidized bed and at least one outlet for withdrawing polymer particles from said internal moving bed reaction unit into said fluidized bed reaction unit and the use of said reactor assembly for the polymerization of an olefin polymer.

## Description

The present invention is related to a gas phase polymerization process for catalytically polymerizing olefin homo- or copolymers using a reactor assembly comprising a fluidized bed reactor with an internal moving bed reaction unit.

### Background of the invention

Gas phase reactors are commonly used for the polymerization of olefins such as ethylene and propylene as they allow relative high flexibility in polymer design and the use of various catalyst systems.

A common gas phase reactor variant is the fluidized bed reactor. In the fluidized bed reactor olefins are polymerized in the presence of a polymerization catalyst in an upwards moving gas stream. The reactor is typically a vertical cylindrical vessel containing the fluidized bed. The bed comprises growing polymer particles containing active catalyst dispersed therein. The polymer bed is fluidized with the help of the fluidization gas comprising the olefin monomer, optionally comonomer(s), optionally chain growth controllers or chain transfer agents, such as hydrogen, and optionally inert gas. The fluidization gas is introduced into an inlet chamber at the bottom of the reactor. In order to make sure that the gas flow is uniformly distributed over the cross-sectional surface area of the inlet chamber in the inlet pipe may be equipped with a flow dividing element, such as a distribution plate, as known in the art, e.g. US 4,933,149 and EP 684 871. Reactor gases exiting the reactor are compressed and recycled. Make-up monomers and optionally hydrogen are added as needed. Entrained particles can be separated by an interposed cyclone and recycled to the polymerization reactor.

The fluidization gas passes through the fluidization bed. The superficial velocity of the fluidization gas must be higher than minimum fluidization velocity of the particles contained in the fluidization bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are known by using common engineering practice. An overview is given, amongst others, in Geldart: Gas Fluidization Technology, J. Wiley & Sons, 1996.

When the fluidization gas is contacted with the bed containing the active catalyst the reactive components of the gas, such as monomers and chain transfer agents, react in the presence of the catalyst in order to produce the polymer product. At the same time the gas is heated by the reaction heat.

The unreacted fluidization gas is removed from the top of the reactor, compressed and cooled in a heat exchanger to remove the heat of the reaction. The gas is cooled to a temperature that is lower than that of the bed to prevent the bed from over-heating because of the reaction. It is possible to cool the gas to a temperature where part of it condenses. When the liquid droplets enter the reaction zone they are vaporized. The vaporization heat ten contributes to the removal of the reaction heat. This kind of operation is called condensed mode and variations of it are disclosed, amongst others, in WO 2007/025640, US 4,543,399, EP 699,213 and WO 94/25495. It is also possible to add condensing agents into the recycle gas stream, as disclosed in EP 696 293. The condensing agents are non-polymerisable components, such as propane, n-pentane, isopentane, n-butane, or isobutene, which are at least partially condensed in the cooler.

Prior to the entry into the reactor fresh reactants are introduced into the fluidization gas stream to compensate for the losses caused by the reaction and product withdrawal. It is generally known to analyse the composition of the fluidized gas and introduce the gas components to keep the composition constant. The actual composition is determined by the desired properties of the product and the catalyst used in the polymerization.

The catalyst may be introduced into the reactor in various ways, either continuously or intermittently. Amongst others, WO 01/05845 and EP 499 759 disclose such methods. Where the gas phase reactor is a part of a reactor cascade the catalyst is usually dispersed within the polymer particles from the preceding polymerization stage. The polymer particles may be introduced into the gas phase reactor as disclosed in EP 1 415 999 and WO 00/26258.

The polymeric product may be withdrawn from the gas phase reactor either continuously or intermittently. Combinations of these methods may also be used. Continuous withdrawal is disclosed, amongst others, in US 4,621,952, EP 188 125, EP 250 169 and EP 579 426.

The top part of the gas phase reactor may include a so-called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

Another type of fluidized bed reactor which does not include a flow dividing element and a disengagement zone is disclosed in EP 2 495 037. This fluidized bed reactor is characterized by it specific shape. The cylindrical vessel comprises a bottom zone, a middle zone and an upper zone, whereby the equivalent cross-sectional diameter of the upper zone is monotonically decreasing with respect to the flow direction of the fluidization gas through the fluidized bed reactor and the middle zone has an essentially constant equivalent cross-sectional diameter with respect to the flow direction of the fluidization gas through the fluidized bed reactor.

In order to obtain a broader molecular weight distribution or a broader composition distribution or both, use is made of different reactor conditions, such as different concentrations of monomer, comonomer and/or hydrogen, the use of specific and/or combined catalysts. The different reactor conditions are typically applied in different reactors such as cascaded reactors and/or a combination of different reactor units within a single reactor.

One example of different reactor units within a single reactor system is known from WO 2009/080363. Herein, a moving bed reactor unit is combined with a fluidized bed reactor unit.

The moving bed reactor unit is governed by a different flow regime compared to the fluidized bed reactor unit. Typically, a moving bed is characterized as a bed of (polymeric) particles, which move downwards in a substantially plug flow mode, while the fluidized bed reactor is characterized as a bed of polymer particles which is supported by a stream of upwards moving gas as outlined above.

For clarity it is observed that in both the moving bed reactor and the fluidized bed reactor the gas flows generally upwards. The main difference is in the flow of the polymer particles.

In contrast to the fluidized bed reactor as outlined above the gas velocity in the moving bed reactor is smaller than the minimum fluidization velocity. The polymer particles thus will typically form a settled bed which moves downwards in essentially plug flow. The gas usually flows upwards also in a plug flow mode. By "plug flow mode" it is meant that there is little or preferably no backmixing. The moving bed reactor may be positioned within, around or adjacent to the fluidized bed reactor.

Especially for reactor assemblies having a fluidized bed reactor and an internal moving bed reactor positioned within the fluidized bed reactor separation of the moving bed reactor from the fluidized bed reactor is a critical issue. The pressure in the fluidized bed reactor at the top of the reactor is generally lower than at its bottom. In contrast to that the pressure at the top of the moving bed reactor needs to be high enough for establishing the settled bed. Thereby, it has to be considered that the pressure differences between the fluidized bed reactor and the moving bed reactor is not too large in order to ensure that the gas velocity between the two reactors becomes too high. It is therefore appreciable to be able to adjust the pressure in the two reactors independently from each other according to the needs. Further, the reaction zones of the moving bed reactor and the fluidized bed reactor are advantageously operated independently for avoiding carry over of reactants from one reaction zone to the other.

Therefore, there is a need for efficiently separating the reaction zone in the internal moving bed reactor from the reaction zone of the fluidized bed reactor so that the flow of the polymer particles is not disturbed and independent gas circulations in the two reaction zones are established.

### Summary of the invention

The present invention is based on the finding that the problem of insufficient separation of the two reaction zones can be overcome by separating the moving bed reaction zone from the fluidized bed reaction zone by means of at least one substantially vertical wall that exceeds the height of the fluidized bed in the fluidized bed reaction zone so that the two reaction zones are sufficiently separated to establish different polymerization conditions in the two reaction zones. Entry of polymer particles from the fluidized bed reaction unit to the moving bed reaction unit is obtained by an inlet in the at least one substantially vertical wall below the upper level of the fluidized bed.

The present invention insofar provides in one embodiment a reactor assembly for the catalytic polymerization of olefin monomer and optionally comonomer(s) comprising at least one fluidized bed reaction unit comprising an internal moving bed reaction unit, wherein
the fluidized bed reaction unit comprises a substantially vertical housing, which has a gas distribution plate at the bottom of said housing, a gas entry chamber below said gas distribution plate for introducing gas into the fluidized bed reaction unit, a lower substantially cylindrical section above said gas distribution plate for maintaining a fluidized bed, an upper substantially cylindrical section for allowing particles entrained from the bed to settle back to the bed, wherein said upper substantially cylindrical section has a larger diameter as said lower substantially cylindrical section, a substantially conical section connecting said lower substantially cylindrical section and said upper substantially cylindrical section, and at least one compartment within said housing for maintaining a settled bed being separated from the rest of the volume within said housing by at least one substantially vertical wall,
characterized in that
said at least one substantially vertical wall extends from a point above said gas distribution plate into said upper substantially cylindrical section, and
said at least one compartment has at least one inlet for introducing polymer particles into said at least one compartment from the fluidized bed within the upper end of said lower substantially cylindrical section and at least one outlet for withdrawing polymer particles from said at least one compartment into the lower end of said lower substantially cylindrical section shortly above said gas distribution plate.

In a different embodiment the present invention provides a reactor assembly for the catalytic polymerization of olefin monomer and optionally comonomer(s) comprising at least one fluidized bed reaction unit comprising an internal moving bed reaction unit, wherein
the fluidized bed reaction unit comprises a bottom zone, a middle zone and an upper zone, with the equivalent cross-sectional diameter of said upper zone being monotonically decreasing with respect to the flow direction of the fluidized gas through the fluidized bed unit, said middle zone having an essentially constant equivalent cross-sectional diameter with respect to the flow direction of the fluidized bed unit and said bottom zone being monotonically increasing with respect to the flow direction of the fluidized gas through the fluidized bed unit,
wherein the fluidized bed unit further comprises at least one compartment within said middle zone for maintaining a settled bed being separated from the rest of the volume within said middle zone by at least one substantially vertical wall,
characterized in that
said at least one substantially vertical wall extends from a point above said bottom zone into said upper zone, and
said at least one compartment has at least one inlet for introducing polymer particles into said at least one compartment from the fluidized bed within the upper end of said middle zone and at least one outlet for withdrawing polymer particles from said at least one compartment into the lower part of said fluidized bed unit .

Still further the present invention provides the use of a reactor assembly according to the present invention for the polymerization of an olefin polymer.

### Detailed Description of the Invention

### Definitions

The upper end of lower substantially cylindrical section in the first embodiment and the upper end of said middle zone in the second embodiment of the reactor assembly according to the invention defines the region of the fluidized bed reaction unit in which the upper end of the fluidized bed level in both embodiments is established.

In the first embodiment of the reactor assembly, in which the fluidized bed reaction unit comprises a gas distribution plate, the upper end of lower substantially cylindrical section is defined to be the region of from 0.6 of the height of the lower substantially cylindrical section starting from the gas distribution plate to the beginning of the substantially conical section connecting said lower substantially cylindrical section and the upper substantially cylindrical section, preferably of from 0.7 of the height of the lower substantially cylindrical section to the beginning of said substantially conical section, most preferably of from 0.8 of the height of the lower substantially cylindrical section to the beginning of said substantially conical section.

In the second embodiment of the reactor assembly, in which the fluidized bed reaction unit does not comprise a gas distribution plate, the upper end of the middle zone is defined to be the region of from 0.6 of the height of the middle zone starting from the lowest point of the middle zone being the lowest point of the fluidized bed reaction unit with an essentially constant equivalent cross-sectional diameter to the beginning of the upper zone being the lowest point of the fluidized bed reaction unit where cross-sectional diameter is monotonically decreasing with respect to the flow direction of the fluidized gas, preferably of from 0.7 of said height of the middle zone to the beginning of said upper zone, most preferably of from 0.8 of said height of the middle zone to the beginning of said upper zone.

The lower end of said lower substantially cylindrical section shortly above said gas distribution plate in the first embodiment and the lower end of said middle zone shortly above said bottom zone in the second embodiment of the reactor assembly according to the invention defines the region of the fluidized bed reaction unit below the fluidized bed in which the upward gas flow is uniformly distributed and where the base of the fluidized bed resides.

In the first embodiment of the reactor assembly said volume being shortly above the gas distribution plate is in the range of 0.1 to 1.5 times the diameter of the lower substantially cylindrical section above the gas distribution plate, preferably 0.2 to 1 times the diameter of the lower substantially cylindrical section above the gas distribution plate, most preferably 0.3 to 1 times the diameter of the lower substantially cylindrical section above the gas distribution plate.

In the second embodiment of the reactor assembly the lower part of said fluidized bed unit is the region of the fluidized bed unit below the lower end of the fluidized bed. Depending on the design of the fluidized bed unit this region can be in the bottom zone or at the lower end of the middle zone shortly above the bottom zone.

Said lower end of the middle zone is in the range of 0.1 to 1.5 times the diameter of the middle zone above the lowest point of the middle zone, preferably 0.2 to 1 times the diameter of the middle zone above the lowest point of the middle zone, most preferably 0.3 to 1 times the diameter of the middle zone above the lowest point of the middle zone. Thereby, the lowest point of the middle zone is as defined above.

The terms bottom -, middle - and upper zone indicate the relative position with respect to the base of the fluidized bed reaction unit. The fluidized bed reaction unit vertically extends in upward direction from the base, whereby the cross-section(s) of the fluidized bed reaction unit are essentially parallel to the base.

Monotonically decreasing is to be understood in a mathematical sense, i.e. the average diameter will decrease or will be constant with respect to the flow direction of the fluidization gas through the fluidized bed reaction unit. Monotonically decreasing equivalent cross-sectional diameter includes two situations namely the decrease of the equivalent cross-sectional diameter with respect to the flow direction of the fluidization gas through the fluidized bed reaction unit and also constancy of constancy of the equivalent cross-sectional diameter with respect to the flow direction of the fluidization gas.

Equivalent cross-sectional diameter is the normal diameter in case of circular cross-section. If the cross-section is not circular, the equivalent cross-sectional diameter is the diameter of a circle having the same area as the cross-section of the non-circular cross-section embodiment.

A cone is a three-dimensional geometric shape that tapers smoothly from a flat to the apex. This flat usually will be a circle but may also be elliptic. All cones also have an axis which is the straight line passing through the apex, about which the lateral surface has a rotational symmetry.

"Directly connected" means that two zones are directly adjacent.

### Description

In one embodiment of the present invention the fluidized bed reaction unit comprises a distribution plate and a disengagement zone within the upper substantially cylindrical section.

The fluidized bed reaction unit according to the first embodiment of the present invention preferably comprises one or more inlets for olefin monomer, optionally comonomer, catalyst or catalyst containing prepolymer, chain growth controller or chain transfer agent, and/or fluidization gas. Preferably at least one inlet is located at the lower part of the fluidized bed reaction unit.

It is thereby preferred that the inlet(s) for olefin monomer, optionally comonomer, chain growth controller or chain transfer agent, and/or fluidization gas are preferably located below the distribution plate.

Preferably, the catalyst or catalyst containing prepolymer are introduced into the fluidized bed reaction unit through a separate inlet. This separate inlet is preferably situated in the middle part of the fluidized bed reaction unit, more preferably in lower substantially cylindrical section.

The fluidized bed reaction unit according to the first embodiment of the present invention further preferably comprises one or more outlets for gas and/or polymerized particles. This one or more outlet is located within the lower substantially cylindrical section of the fluidized bed reaction unit, preferably above the level of 0.2 times the height of the lower substantially cylindrical section above the gas distribution plate and below the level of 0.8 times the height of the lower substantially cylindrical section above the gas distribution plate.

The gas outlet is preferably located at the upper end of the fluidized bed reaction unit in the upper substantially cylindrical section. The outlet for the polymer particles is preferably located in the middle part of the reactor more preferably in lower substantially cylindrical section.

In the second embodiment of the present invention the fluidized bed reaction unit does not comprise a distribution plate and a disengagement zone. The fluidized bed reaction unit of that embodiment comprises a bottom zone, a middle zone and an upper zone, with the equivalent cross-sectional diameter of said upper zone being monotonically decreasing with respect to the flow direction of the fluidized gas through the fluidized bed reaction unit, said middle zone having an essentially constant equivalent cross-sectional diameter with respect to the flow direction of the fluidized bed reaction unit and said bottom zone being monotonically increasing with respect to the flow direction of the fluidized gas through the fluidized bed reaction unit.

The fluidized bed reaction unit may consist of three zones, a bottom zone, a middle zone and an upper zone.

However, the fluidized bed reaction unit may also comprise more than three zones, a bottom zone, a middle zone and an upper zone and at least one additional zone, whereby this at least one additional zone is located below the bottom zone with respect to the flow direction of the fluidization gas.

The equivalent cross-sectional diameter of the upper zone preferably is strictly monotonically decreasing with respect to the flow direction of the fluidization gas, i.e. generally in upwards vertical direction.

The middle zone of the fluidized bed reaction unit typically will be in the form of a circular cylinder being denoted herein simply cylinder. However, it is possible that the middle zone of the fluidized bed reaction unit is in the form of an elliptic cylinder. Then the bottom zone preferably is preferably in the form an oblique cone. Then more preferably the upper zone is also in the form of an oblique cone.

From a more functional perspective, the middle zone will essentially form the first domain wherein the superficial gas velocity of the fluidization gas is essentially constant. The upper zone will essentially form the second domain wherein the superficial gas velocity of the fluidization gas is higher relative to the first domain.

The upper zone of the reactor assembly according to the present invention is preferably shaped such that a gas-particle stream vicinal to the inner walls is created, whereby the gas-particle stream is directed downwards to the base. This gas-particle stream leads to an excellent particle-gas distribution and to an excellent heat balance. Further the high velocity of the gas and particles vicinal to the inner walls minimizes lump- and sheet formation.

Preferably, the ratio of height of the fluidized bed reaction unit to the equivalent cross-sectional diameter of the middle zone of the fluidized bed unit is from 2 to 10, said upper zone is directly connected to said middle zone and said bottom zone comprises an inlet for introducing gas into the fluidized bed reaction unit.

It is further preferred that the ratio of the height of the upper zone to the diameter of the middle zone is within the range of from 0.3 to 1.5, more preferably 0.5 to 1.2 and most preferably 0.7 to 1.1.

It is particularly preferred that the reactor assembly according to the present invention includes an upper zone being cone-shaped and a middle zone being cylindrical shaped. The cone forming the upper zone preferably is a right circular cone and the cylinder forming the middle zone preferably is a circular cylinder.

More preferably the cone-angle of the cone-shaped upper zone is 10° to 50°, most preferably 20 to 40°. As defined above, the cone-angle is the angle between the axis of the cone and the lateral area.

The specific cone-angles of the cone-shaped upper zone further improve the tendency for back-flow of the particles countercurrent to the fluidization gas. The resulting unique pressure balance leads to an intensive break up of bubbles, whereby the space-time-yield is further improved. Further as mentioned above, the wall flow velocity, i.e., the velocity of particles and gas vicinal to the inner walls is high enough to avoid the formation of lumps and sheets.

The fluidized bed reaction unit according to the second embodiment preferably has a bottom zone shaped such that the particles distribute the gas over the whole cross-section of the bed. In other words, the particles act as a gas distribution grid. In the bottom zone gas and solids are mixed in highly turbulent conditions. Because of the shape of the zone, the gas velocity gradually decreases within said bottom zone and the conditions change so that a fluidized bed is formed.

Preferably, one or both of the upper zone and bottom zone is cone-shaped and/or the middle zone is cylindrical shaped.

The following specifically preferred reactor geometries can be combined with the geometry consisting of three zones a bottom zone, a middle zone and an upper zone and the geometry including at least one additional zone, whereby this zone or these zones is/are located below the bottom zone.

Preferably, the equivalent cross-sectional diameter of the bottom zone is monotonically increasing with respect to the flow direction of the fluidization gas through the fluidized bed reaction unit. As the flow direction of the fluidization gas is upwards with respect to the base, the equivalent cross-sectional diameter of the bottom zone is vertically monotonically increasing. Monotonically increasing is to be understood in a mathematical sense, i.e. the average diameter will increase or will be constant with respect to the flow direction of the fluidization gas through the fluidized bed reaction unit.

The equivalent cross-sectional diameter of the bottom zone preferably is strictly monotonically increasing with respect to the flow direction of the fluidization gas through the reactor, i.e. generally vertically upwards.

More preferably, the bottom zone is cone-shaped and the middle zone is cylindrical shaped.

The bottom zone preferentially has right circular cone shape and the middle zone is in the form of a circular cylinder. Alternatively the middle zone is in the form of an elliptic cylinder and the bottom and the upper zone are in the form oblique cones.

More preferably, the cone-angle of the cone-shaped bottom zone is 5° to 30°, even more preferably 7° to 25° and most preferably 9° to 18°, whereby the cone-angle is the angle between the axis of the cone and the lateral surface.

It is further preferred that the equivalent diameter of the bottom zone increases from about 0.1 to about 1 metres per one metre of height of the bottom zone. More preferably, the diameter increase from 0.15 to 0.8 m/m and in particular from 0.2 to 0.6 m/m.

The preferred cone-angles lead to additional improved fluidization behaviour and avoid the formation of stagnant zones. As a result, the polymer quality and stability of the process are improved. Especially, a too wide cone-angle leads to an uneven fluidization and poor distribution of the gas within the bed. While an extremely narrow angle has no detrimental effect on the fluidization behaviour it anyway leads to a higher bottom zone than necessary and is thus not economically feasible.

However, as mentioned above, in a second embodiment, there is an at least one additional zone being located below the bottom zone. It is preferred that the at least one additional zone, or if there is more than one additional zone, the total of the additional zones contributes/contribute to a maximum of 15% to the total height of the reactor, more preferably 10% to the total height of the reactor and most preferably less than 5% of the total height of the reactor. A typical example for an additional zone is a gas entry zone.

Preferably, there is an unobstructed passageway in the direction of flow of the fluidization gas through the fluidized bed reaction unit between the bottom zone and the upper zone. An unobstructed passageway includes all geometries which allow substantially free exchange of gas and particles between and within said zones. An unobstructed passageway is characterized by the absence of internals such as distribution plates or grids resulting in substantially increased flow resistivity. An unobstructed passageway is characterized by a ratio of the free cross-section / total cross-section with respect to the partition between the bottom zone and the middle zone of at least 0.95, whereby the free cross-section is the area allowing interchange of gases and whereby the total cross-section is the area of the inner reactor cross section limited by the walls of the fluidized bed reaction unit.

The fluidized bed reaction unit according to the second embodiment is further described in EP 2 495 037. The disclosure of this document is incorporated by reference.

The fluidized bed reaction unit according to the second embodiment of the present invention preferably comprises one or more inlets for olefin monomer, optionally comonomer, catalyst or catalyst containing prepolymer, chain growth controller or chain transfer agent, and/or fluidization gas. Preferably at least one inlet is located at the lower part of the fluidized bed reaction unit.

It is thereby preferred that the inlet(s) for olefin monomer, optionally comonomer, chain growth controller or chain transfer agent, and/or fluidization gas are preferably located in the bottom zone.

Preferably, the catalyst or catalyst containing prepolymer are introduced into the fluidized bed reaction unit through a separate inlet. This separate inlet is preferably situated in the middle part of the fluidized bed reaction unit, more preferably in the middle zone.

The fluidized bed reaction unit according to the first embodiment of the present invention further preferably comprises one or more outlets for gas and/or polymerized particles. This one or more outlet is preferably located at the upper end of the fluidized bed reaction unit.

The gas outlet is preferably located at the upper end of the fluidized bed reaction unit in the upper zone. The outlet for the polymer particles is preferably located in the middle part of the reactor more preferably in the middle zone.

The new reactor assembly according to both above described embodiments has various advantages. The pressure of the moving bed reaction zone can be adjusted independently from the pressure of the fluidized bed reaction zone. Further, the moving bed reaction zone can be completely separated from the fluidized bed reaction zone so that carry over of reactants from one reaction zone to the other reaction zone can be avoided. The two reaction zones instead can be operated under completely different polymerization conditions which increases the possibility to produce polymers with variable properties.

This is achieved in the reactor system by dividing the moving bed reaction zone from the fluidized bed reaction zone by means of at least one substantially vertical wall that exceeds the height of the fluidized bed in the fluidized bed reaction zone so that the two reaction zones are sufficiently separated to establish different polymerization conditions in the two reaction zones.

It is preferred that a lower part of the at least one substantially vertical wall is submerged in the fluidized bed within the fluidized bed reaction unit whereas an upper part of the at least one substantially vertical wall extends beyond the upper level of the fluidized bed. Preferably the ratio the length of said lower part to that upper part is from 10 : 1 to 1 : 1, more preferably from 7 : 1 to 1.5 : 1, most preferably from 5 : 1 to 2 : 1.

The at least one substantially vertical wall may enclose at least one compartment that is open at its top. However, it is preferred that the at least one substantially vertical wall encloses at least one compartment that is closed at its top.

In one embodiment the length of the at least one substantially vertical wall preferably ends at its top below the top wall of the fluidized bed reaction unit. It is thereby preferred that the at least one substantially vertical wall encloses one or more compartment(s) that is/are closed with one or more top cover(s) at the top end of the at least one substantially vertical wall.

In another embodiment the length of the at least one substantially vertical wall preferably ends at its top at the top wall of the fluidized bed reaction unit. It is thereby preferred that the at least one substantially vertical wall encloses one or more compartment(s) that is/are closed at the top end of the at least one substantially vertical wall by means of the top wall of the fluidized bed reaction unit. This embodiment has the advantage that no polymer particles can collect on the top cover at the top of the at least one substantially vertical wall.

The at least one substantially vertical wall can be suspended from a higher section of the fluidized bed reaction unit, supported by a bottom section or secured to the wall of the fluidized bed reaction unit.

Preferably, said at least one substantially vertical wall is a pipe or hollow section that is preferably concentric with the wall of the fluidized bed reactor unit. Thereby, it is preferred that a lower part of the pipe or hollow section is completely submerged in the fluidized bed within the fluidized bed reaction unit whereas an upper part of the pipe or hollow section extends beyond the fluidized bed. Preferably the ratio the length of said lower part to that upper part is from 10 : 1 to 1 : 1, more preferably from 7 : 1 to 1.5 : 1, most preferably from 5 : 1 to 2 : 1.

In the present context a hollow section differs from a pipe in that the cross-section of a pipe is curved, such as circular or elliptical, whereas the cross-section of a hollow section is angular such as triangular, rectangular octagonal or with more angles. Thereby, the angles can be uniformly divided or not. The pipe or the hollow section can have a cylindrical or tapered shape such as a cone shape, a hyperbolic shape or an elliptic shape. In case of a cone shape it is preferred that the apex angle formed by the walls of the pipe or the hollow section is generally not more than 5°, preferably not more than 2.5°. The ratio of the area of the radial cross-section of the pipe or hollow section to that of the fluidized bed reaction unit is preferably between 1 : 9 and 9 : 10, most preferably between 1 : 5 and 3 : 4. In the case of a conical pipe or hollow section the same applies to the ratio of the average cross-sectional area to the area of the cross-section of the fluidized bed reaction unit.

The pipe or hollow section can be situated in the center or at the side wall of the fluidized bed reaction unit.

The at least one substantially vertical wall may also be at least one substantially axially oriented flat, curved or folded plate. It is preferred that such a substantially vertical wall is situated and preferably connected to the inner side wall of the fluidized bed reaction unit. In this way, the at least one compartment in which the moving bed reaction zone is present is enclosed by the at least one substantially axially oriented flat, curved or folded plate and part of the inner side wall of the fluidized bed reaction unit. The ratio of area of the radial cross-section of the at least one compartment in which the moving bed reaction zone is present to the radial cross-section of the fluidized bed reaction unit is preferably between 0.1 to 0.9, more preferably between 0.2 to 0.7. The substantially axially oriented flat, curved or folded plate should be substantially parallel with the axis of the fluidized bed reaction unit. It may also be out of parallel by not more than 5°, preferably not more than 2°.

The at least one compartment comprises at least one inlet for the polymer. In the simplest form this is an opening in the wall separating the compartment from the fluidized bed reaction unit. The inlet for the polymer should be within the volume containing the fluidized bed as otherwise no polymer would enter the compartment. On the other hand, the inlet for the polymer should be at a level which is above the volume occupied by the settled bed within the compartment. Typically the inlet for the polymer is located at the upper end of the lower substantially cylindrical section. If we denote the distance between the gas distribution plate and the upper end of the lower substantially cylindrical section in the first embodiment or the distance between the upper end of the lower section and the upper end of the middle section in the second embodiment by H, then the inlet for the polymer is preferably at a level of 0.5xH to H above the fluidization grid or the upper end of the lower section, more preferably at a level of 0.65xH to 0.95xH above the fluidization grid or the upper end of the lower section.

The at least one inlet should be sufficiently large to allow the transfer of polymer into the compartment containing the settled bed. On the other hand, too large opening could allow too much transfer of gas between the fluidized bed reaction unit and the compartment containing the settled bed, thereby making it more difficult to operate the units independently.

For instance, the diameter of the inlet for polymer can be at least 0.25xD, such as at least 0.5xD, where D is the internal diameter of the compartment containing the settled bed. On the other hand, it can be as large as 2xD, such as 1.5xD or 1xD.

The at least one compartment containing the settled bed preferably comprises at least one inlet for gas, such as olefin monomer, optionally comonomer, catalyst or catalyst containing prepolymer, chain growth controller or chain transfer agent, and/or fluidization gas, within the lower part of said compartment.

Further, the at least one compartment containing the settled bed preferably comprises at least one outlet for gas, such as non-reacted olefin monomer, and optionally comonomer, within the upper part, more preferably at the top wall of said compartment.

It is preferred the at least one compartment containing the settled bed comprises means for actively transferring polymer particles from the at least one compartment to the lower end of said lower substantially cylindrical section in the first embodiment of the present invention or into said lower part of the fluidized bed unit in the second embodiment of the present invention. Such means for actively transferring polymer particles can be selected from pneumatic means such as suction effected by introduction of pneumatic gas like fluidization gas, means for transferring metered quantities of polymer particles such as a screw, rotary feeder, piston means or the like.

The means for actively transferring polymer particles are preferably situated at the lower end of said compartment, most preferably at the bottom end of said compartment.

It is preferred that said compartment is a closed compartment with side wall(s), a top wall and a bottom wall, in which the incoming streams are introduced by means of inlets and the outgoing streams are exported by means of outlets.

The reactor assembly comprises one or more of said compartments which form moving bed reaction unit(s). The reactor assembly can comprise one, two, three or even more of said compartments. The upper limit of the number of said compartments in the reactor assembly is usually 10. In a preferred embodiment the reactor assembly consists of one fluidization bed reaction unit containing one compartment, i.e. one moving bed reaction unit.

The reactor assembly according to the invention may be used for polymerizing monomers in the presence of a polymerization catalyst. Monomers which can thus be polymerized include olefins, diolefins and other polyenes. The reactor may thus be used to polymerize ethylene, propylene, 1-butene, 1-pentene, 1-hexene, 4-methyl-1-pentene, 1-heptene, 1-octene, 1-decene, styrene, norbornene, vinyl norbornene, vinylcyclohexane, butadiene, 1,4-hexadiene, 4-methyl-1,7-octadiene, 1,9-decadiene and their mixtures. Especially, the reactor is useful in polymerizing ethylene and propylene and their mixtures, optionally together with other alpha-olefin comonomers having from 4 to 12 carbon atoms.

In addition to the monomers different co-reactants, adjuvants, activators, catalysts and inert components may be introduced into the reactor.

Any polymerization catalyst may be used to initiate and maintain the polymerization. Such catalysts are well known in the art. Especially the catalyst should be in the form of a particulate solid on which the polymerization takes place. Suitable catalysts for olefin polymerization are, for instance, Ziegler-Natta catalysts, chromium catalysts, metallocene catalysts and late transition metal catalysts. Also different combinations of two or more such catalysts, often referred to as dual site catalysts, may be used.

Examples of suitable Ziegler-Natta catalysts and components used in such catalysts are given, for instance, in WO-A-87/07620, WO-A-92/21705, WO-A-93/11165, WO-A-93/11166, WO-A-93/19100, WO-A-97/36939, WO-A-98/12234, WO-A-99/33842, WO-A-03/000756, WO-A-03/000757, WO-A-03/000754, WO-A-03/000755, WO-A-2004/029112, WO-A-92/19659, WO-A-92/19653, WO-A-92/19658, US-A-4382019, US-A-4435550, US-A-4465782, US-A-4473660, US-A-4560671, US-A-5539067, US-A-5618771, EP-A-45975, EP-A-45976, EP-A-45977, WO-A-95/32994, US-A-4107414, US-A-4186107, US-A-4226963, US-A-4347160, US-A-4472524, US-A-4522930, US-A-4530912, US-A-4532313, US-A-4657882, US-A-4581342, US-A-4657882, EP-A-688794, WO-A-99/51646, WO-A-01/55230, WO-A-2005/118655, EP-A-810235 and WO-A-2003/106510.

Examples of suitable metallocene catalysts are shown in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462, EP-A-1739103, EP-A-629631, EP-A-629632, WO-A-00/26266, WO-A-02/002576, WO-A-02/002575, WO-A-99/12943, WO-A-98/40331, EP-A-776913, EP-A-1074557 and WO-A-99/42497,

The catalysts are typically used with different activators. Such activators are generally organic aluminium or boron compounds, typically aluminium trialkyls, alkylaluminium halides, alumoxanes In addition different modifiers, such as ethers, alkoxysilanes, and esters and like may be used.

Further, different coreactants, may be used. They include chain transfer agents, such as hydrogen and polymerization inhibitors, such as carbon monoxide or water. In addition, an inert component is suitably used. Such inert component may be, for instance, nitrogen or an alkane having from 1 to 10 carbon atoms, such as methane, ethane, propane, n-butane, isobutane, n-pentane, isopentane, n-hexane or like. Also mixtures of different inert gases may be used.

The polymerization in the fluidized bed reaction unit is preferably conducted at a temperature and pressure where the fluidization gas essentially remains in vapour or gas phase. For olefin polymerization the temperature is suitably within the range of from 30 to 110°C, preferably from 50 to 100 °C. The pressure is suitably within the range of from 1 to 50 bar, preferably from 5 to 35 bar.

Preferably, the monomer is introduced below the level representing 30 % of the total height of the moving bed measured from the base of the moving bed. More preferably, the monomer is introduced below the level representing 20 %, even more preferably below the level representing 10 %, of the total height of the moving bed.

The monomer may be the same as used in the fluidized bed reaction unit. Monomers which can thus be polymerized include olefins, diolefins and other polyenes. The reactor may thus be used to polymerize ethylene, propylene, 1-butene, 1-pentene, 1-hexene, 4-methyl-1-pentene, 1-heptene, 1-octene, 1-decene, styrene, norbornene, vinyl norbornene, vinylcyclohexane, butadiene, 1,4-hexadiene, 4-methyl-1,7-octadiene, 1,9-decadiene and their mixtures. Especially, the reactor is useful in polymerizing ethylene and propylene and their mixtures, optionally together with other alpha-olefin comonomers having from 4 to 12 carbon atoms.

Especially preferably at least one of the monomers polymerized in the moving bed reaction unit is the same as is polymerized in the fluidized bed reaction unit. In particular, at least the main monomer, constituting at least 50 % of the total monomer in the moving bed reaction unit, is the same as the monomer constituting at least 50 % of the total monomer in the fluidized bed reaction unit.

It is preferred that polymers with different properties are produced in the moving bed reaction unit and the fluidized bed reaction unit. In one preferred embodiment the polymer produced in the moving bed reaction unit has a different molecular weight and optionally also a different comonomer content than the polymer produced in the fluidized bed reaction unit. To achieve this aim a reaction gas is introduced into the moving bed reaction unit. The objective of the reaction gas is to produce an upwards flowing net stream of gas within the moving bed reaction unit. This upwards flowing gas stream has a composition which is different from the composition of the fluidization gas stream. The polymerization within the moving bed is then determined by the composition of said upwards flowing gas stream.

The components of the reaction gas include the monomer(s) to be polymerized, eventual chain transfer agent(s) and eventual inert gas or gases. As mentioned above, one or all components of the reaction gas may be introduced into the moving bed reaction unit as liquid which then vaporizes in the moving bed. The reaction gas is introduced into the bottom part of the moving bed reaction unit as described above for the monomer.

As mentioned above, the gas flows upwards within the moving bed reaction unit. The superficial velocity of the upwards flowing gas stream must be lower than the minimum fluidization velocity for the particles forming the moving bed as otherwise the moving bed would be at least partly fluidized. Therefore, the superficial velocity of the gas stream should be from 0.001 to 0.1 m/s, preferably from 0.002 to 0.05 m/s and more preferably from 0.005 to 0.05 m/s.

The reaction gas that has passed the moving bed is withdrawn from the upper part of the moving bed reaction unit through a gas outlet located there. The majority of the fluidization gas entering the top of the moving bed reaction unit together with the polymer is withdrawn through the same outlet.

As polymer is withdrawn from the base of the bed the particles move slowly downwards within the bed. The movement is preferably substantially plug-flow where the residence time distribution of the particles in the reactor is narrow. Therefore, each particle has had substantially the same time to polymerize within the moving bed reaction unit and no particle has passed the reactor without having time to polymerize. This is a difference to a perfectly mixed reactor, such as a fluidized bed reaction unit, where the residence time distribution is very broad.

According to one preferred embodiment in the moving bed reaction unit a propylene copolymer is produced which has a higher molecular weight than the propylene copolymer produced in the fluidized bed reaction unit. Then the reaction gas mixture introduced to the base of the bed contains propylene and comonomer, such as ethylene. In addition, it may contain a small amount of hydrogen. The fluidization gas contains propylene, comonomer and a relatively high amount of hydrogen. The gas mixture above the moving bed is withdrawn from the upper zone of the moving bed reaction unit. Thereby the hydrogen to propylene mole ratio within the moving bed may be maintained at a lower level than the corresponding ratio in the fluidization gas. In this way the molecular weight of the polymer produced in the moving bed reaction unit is higher than that of the polymer produced in the fluidized bed reaction unit.

By adjusting the composition of the reaction gas the polymer produced in the moving bed reaction unit may alternatively have a lower molecular weight or alternatively or additionally have a higher or lower content of comonomer than the polymer produced in the fluidized bed reaction unit. It is also, of course, possible to adjust the conditions so that the same polymer is produced in the two reactors.

The temperature within the moving bed reaction unit may be adjusted according to the needs. It should, however, be lower than the sintering temperature of the polymer contained in the reactor. The temperature can suitably be chosen to be within the range of from 40 to 95 °C, preferably from 50 to 90 °C and more preferably from 65 to 90 °C, such as 75 or 85 °C.

The pressure at the top of the moving bed reaction unit is preferably close to the pressure at the top of the fluidized bed reaction unit. Preferably the pressure is from 1 to 50 bar, more preferably from 5 to 35 bar. Especially preferably the pressure differs by no more than 5 bar from the pressure within the fluidized bed reaction unit. Even more preferably, the pressure is within the range of from 3 bar lower than the pressure within the fluidized bed reaction unit to the same pressure as is within the fluidized bed reaction unit.

In a preferred embodiment the reactor assembly according to the present invention further comprises a loop reactor upstream of said fluidized bed reaction unit. In this embodiment it is preferred that the polymerization catalyst is introduced into the upstream reactor. Into the fluidized bed reaction unit then catalyst containing prepolymer from the loop reactor is introduced.

The present invention is further directed to the use of a reactor assembly according to the present invention in all embodiments as described above for the polymerization of an olefin polymer.

### Brief description of the drawings

- Fig 1: is a sectional drawing of one embodiment of the reactor assembly including a fluidized bed reaction unit according to the first embodiment of the present invention comprising a pipe as moving bed reaction unit in the center of the fluidized bed reaction unit
- Fig 2: is a sectional drawing of another embodiment of the reactor assembly including a fluidized bed reaction unit according to the first embodiment of the present invention comprising a compartment as moving bed reaction unit at the sidewall of the fluidized bed reaction unit that is separated from the fluidized bed reaction zone by means of a plate
- Fig 3: is a sectional drawing of a third embodiment of the reactor assembly including a fluidized bed reaction unit according to the second embodiment of the present invention comprising a pipe as moving bed reaction unit in the center of the fluidized bed reaction unit

### Reference list

- 1: Fluidized bed reaction unit
- 2: Substantially vertical housing
- 3: Gas distribution plate
- 4: Gas entry chamber
- 5: Lower substantially cylindrical section
- 6: Upper substantially cylindrical section (disengaging zone)
- 7: Substantially conical section connecting the lower substantially cylindrical section and the upper substantially cylindrical section
- 8: Moving bed reaction unit
- 9: Vertical wall
- 10: Inlet for introducing polymer particles to the moving bed reaction unit
- 11: Outlet for transferring polymer particles from the moving bed reaction unit to the fluidization bed reaction unit
- 12: Inlet for introducing gas to the moving bed reaction unit
- 13: Outlet for withdrawing gas from the moving bed reaction unit
- 14: Means for actively transferring polymer particles from the moving bed reaction unit to the fluidization bed reaction unit
- 15: Outlet for withdrawing gas from the fluidization bed reaction unit
- 16: Outlet for withdrawing polymer particles from the fluidization bed reaction unit
- 17: Bottom zone
- 18: Middle zone
- 19: Upper zone
- 20: Inlet for introducing gas to the bottom zone

### Detailed description with respect to the drawings

The invention shall now be explained with respect to the drawings.

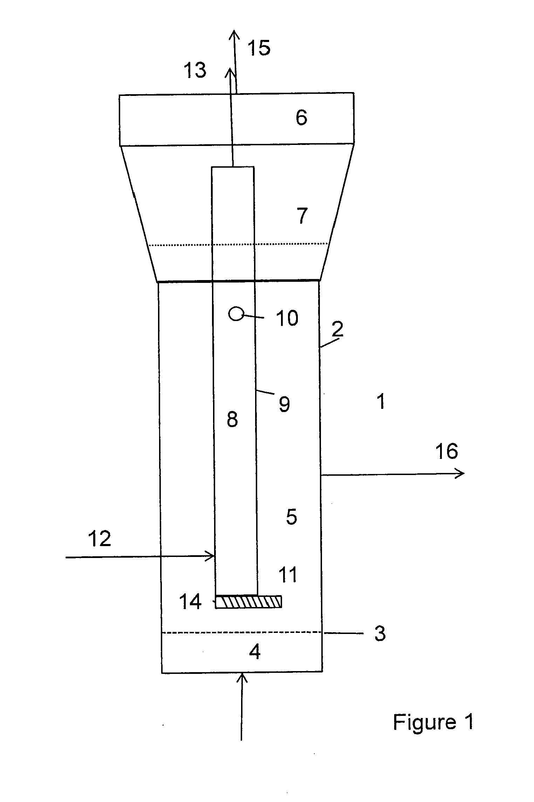

In Figures 1 to 3 the reactor assembly according to the invention for the catalytic polymerization of monomer and optionally comonomer(s) is illustrated.

Fig. 1 and shows the first embodiment in which the reactor assembly includes a fluidized bed reaction unit (1) with a gas distribution plate (3) and a disengagement zone (6).

Monomer, optionally comonomer, certain catalyst components and/or chain growth controller or chain transfer agent and/or fluidization gas enter the fluidized bed reaction unit (1) through gas entry chamber (4) below the gas distribution plate (3) at the lower part of the fluidized bed reaction unit (1) thereby forming the reaction gas. These streams can also be introduced to the fluidized bed reaction unit (1) through one or separate inlets (not shown) upstream the gas entry chamber (4).

The catalyst or catalyst containing prepolymer from an earlier reaction stage enter the fluidized bed reaction unit (1) through a separate inlet (not shown) at the lower substantially cylindrical section (5) of the fluidized bed reactor.

In the fluidized bed reaction unit (1) a fluidized bed of catalytic particles is generated in the lower substantially cylindrical section (5) and maintained on which particles further polymer is formed due to the polymerization reaction. At the top of the fluidized bed reaction unit (1) the polymer particles are separated from the gas in a disengaging zone (6). The gas leaves the fluidized bed reaction unit (1) through gas outlet (15) at the upper end of the fluidized bed reaction unit (1). The gas can be cooled, optionally recycled and then recirculated to the gas inlet of the fluidized bed reaction unit (1). Polymer particles are withdrawn from the fluidized bed reaction unit through outlet (16).

A part of the polymer particles are transferred from the fluidized bed reaction unit to the moving bed reaction unit (8) through inlet (10) forming a bed of settled polymer particles which move slowly downwardly in a more or less plug stream towards the outlet (11). Monomer, optionally comonomer, catalyst or catalyst components and/or chain growth controller or chain transfer agent enter the moving bed reaction unit (8) through inlet (12) at the side wall (9) of the moving bed reactor (8). These streams can also be introduced to the moving bed reactor (8) through separate inlets (12) at the side wall (9) of the moving bed reactor (8). In the bed of polymer particles further polymer is formed due to the polymerization reaction.

The polymer particles formed in the moving bed reaction unit (8) are transferred through outlet (11) by means for actively transferring polymer particles (14). These means can be pneumatic means such as pneumatic gas or metering means such as a screw as well known in the art.

In Fig. 1 the moving bed reaction unit (8) is formed by means of a curved vertical wall (9) in form of a pipe. The pipe is situated in the center of the fluidized bed reaction unit (1). The inlet for the introduction of the polymer particles (10) is formed as a hole in the pipe at the upper end of the fluidized bed.

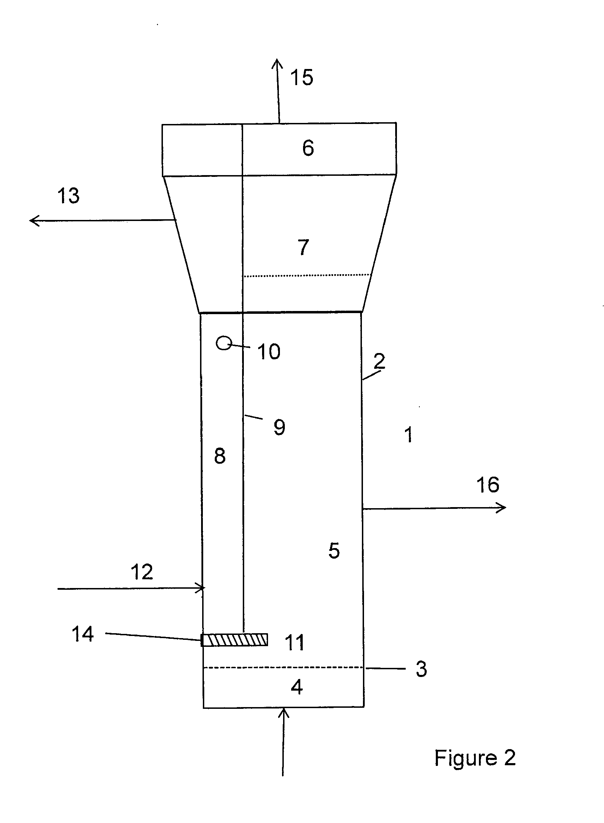

In Fig. 2 the moving bed reaction unit (8) is formed by means of a vertical wall (9) in form of a plate that is connected to the lower substantially cylindrical section (5) at its lower end and the substantially conical section (7) of the fluidized bed reaction unit (1). The moving bed reaction unit (8) is thus formed by the sidewall of the fluidized bed reaction unit and the plate. The inlet for the introduction of the polymer particles (10) is formed as a hole in the plate at the upper end of the fluidized bed.

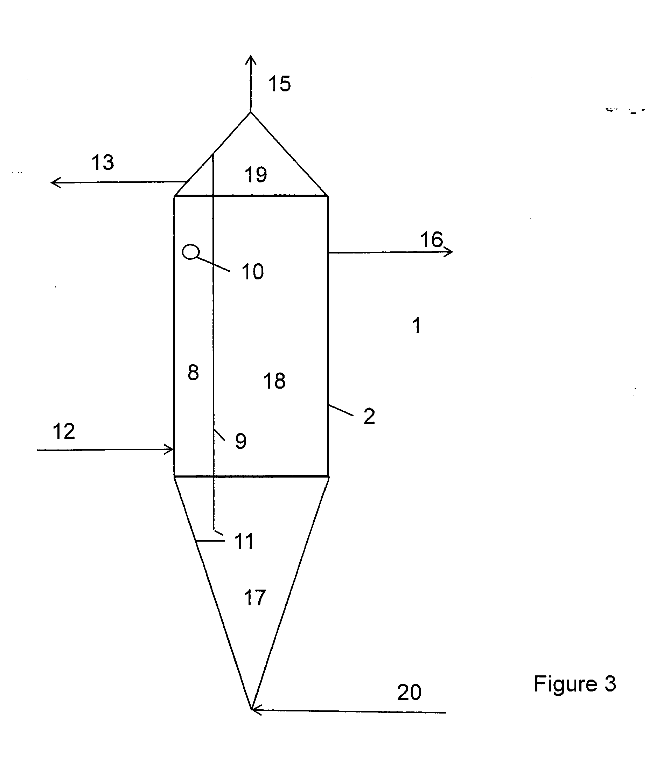

Fig. 3 relates to the second embodiment of the present invention in which the fluidized bed reaction unit (1) does not comprise a distribution plate. The fluidized bed reaction unit (1) has a cone shaped bottom zone (17), a cylindrical shaped middle zone (18) and a cone shaped upper zone (19). In this embodiment the fluidized bed reactor has an inlet (20) for the reaction gas located in the bottom zone (17). The inlet for the catalyst or catalyst containing prepolymer from an earlier reaction stage is situated in the middle zone (18) of the fluidized bed reaction unit (1). The moving bed reaction unit (8) is formed in Figure 3 as a pipe and is situated at the side wall of the fluidized bed reaction unit (1) in the bottom zone (17) and the middle zone (18) and exceeds to the upper zone (19).

In the reactor assembly as illustrated in Figure 3 also moving bed reaction units (8) which have a shape as shown in Figure 1 can also be used. Thereby, the same principles as to length of the vertical wall (9) and situation of inlet (10) as in Figures 1 or 2 apply.

## Claims

1. Reactor assembly for the catalytic polymerization of olefin monomer and optionally comonomer(s) comprising at least one fluidized bed reaction unit (1) comprising an internal moving bed reaction unit (8), wherein
the fluidized bed reaction unit (1) comprises a substantially vertical housing (2), which has a gas distribution plate (3) at the bottom of said housing, a gas entry chamber (4) below said gas distribution plate (3) for introducing gas into the fluidized bed reaction unit (1), a lower substantially cylindrical section (5) above said gas distribution plate (3) for maintaining a fluidized bed, an upper substantially cylindrical section (6) for allowing particles entrained from the bed to settle back to the bed, wherein said upper substantially cylindrical section (6) has a larger diameter as said lower substantially cylindrical section (5), a substantially conical section connecting said lower substantially cylindrical section (7) and said upper substantially cylindrical section (6), and at least one compartment (8) within said housing (2) for maintaining a settled bed being separated from the rest of the volume within said housing (2) by at least one substantially vertical wall (9),
**characterized in that**
said at least one substantially vertical wall (9) extends from a point above said gas distribution plate (3) into said upper substantially cylindrical section (6), and
said at least one compartment (8) has at least one inlet (10) for introducing polymer particles into said at least one compartment (8) from the fluidized bed within the upper end of said lower substantially cylindrical section (5) and at least one outlet (11) for withdrawing polymer particles from said at least one compartment (8) into the lower end of said lower substantially cylindrical section (5) shortly above said gas distribution plate (3).

2. Reactor assembly for the catalytic polymerization of olefin monomer and optionally comonomer(s) comprising at least one fluidized bed reaction unit (1) comprising an internal moving bed reaction unit (8), wherein
the fluidized bed reaction unit (1) comprises a bottom zone (17), a middle zone (18) and an upper zone (19), with the equivalent cross-sectional diameter of said upper zone being monotonically decreasing with respect to the flow direction of the fluidized gas through the fluidized bed unit (1), said middle zone having an essentially constant equivalent cross-sectional diameter with respect to the flow direction of the fluidized bed unit (1) and said bottom zone being monotonically increasing with respect to the flow direction of the fluidized gas through the fluidized bed unit (1),
wherein the fluidized bed unit (1) further comprises at least one compartment (8) within said middle zone for maintaining a settled bed being separated from the rest of the volume within said middle zone by at least one substantially vertical wall (9),
**characterized in that**
said at least one substantially vertical wall (9) extends from a point above said bottom zone into said upper zone, and
said at least one compartment (8) has at least one inlet (10) for introducing polymer particles into said at least one compartment (8) from the fluidized bed within the upper end of said middle zone and at least one outlet (11) for withdrawing polymer particles from said at least one compartment (8) into the lower part of said fluidized bed unit (1).

3. The reactor assembly according to claim 2, wherein one or both of the upper zone (19) and bottom zone (17) is cone-shaped and/or the middle zone (18) is cylindrical shaped.

4. The reactor assembly according to any of the preceding claims, wherein the one or more substantially vertical walls (9) have the shape of a pipe or hollow section.

5. The reactor assembly according to claim 4, wherein the pipe or hollow section is situated in the center of the fluidized bed reaction unit (1).

6. The reactor assembly according to claim 4, wherein the pipe or hollow section is situated at the side wall of the fluidized bed reaction unit (1).

7. The reactor assembly according to any of claims 1 to 3, wherein the at least one substantially vertical wall (9) is at least one substantially axially oriented flat, curved or folded plate.

8. The reactor assembly according to claim 7, wherein the substantially axially oriented flat, curved or folded plate is situated at the side wall of the fluidized bed reaction unit (9).

9. The reactor assembly according to any of the preceding claims, wherein the at least one compartment (8) comprises at least one inlet for gas (12) within the lower part of said compartment (8).

10. The reactor assembly according to any of the preceding claims, wherein the at least one compartment (8) comprises at least one outlet for gas (13) within the upper part of said compartment (8).

11. The reactor assembly according to any of the preceding claims, wherein the at least one compartment (8) comprises means for actively transferring polymer particles (14) from the at least one compartment (8) to the lower end of said lower substantially cylindrical section (5) or into the lower part of the fluidized bed unit (1).

12. The reactor assembly according to claim 11, wherein the means for actively transferring polymer particles (14) are selected from pneumatic means and means for transferring metered quantities of polymer particles.

13. The reactor assembly according to any of the preceding claims, wherein the fluidized bed reaction unit (1) further comprises at least one outlet for gas (15) and at least one outlet for polymer particles (16).

14. The reactor assembly according to any of the preceding claims further comprising at least one loop reactor upstream of said fluidized bed reaction unit (1).

15. Use of a reactor assembly according to any of the preceding claims for the polymerization of an olefin polymer.
